# EUROPÄISCHE PATENTANMELDUNG

(11) **EP 4 279 314 A2**
(43) Veröffentlichungstag der Anmeldung: **22.11.2023**
(21) Anmeldenummer: 23165869.1
(22) Anmeldetag: 31.03.2023
(51) Int. Cl.: B60K 35/00, B60R 21/00

(54) **ANZEIGEVORRICHTUNG, ARMATURENTAFEL UND FORTBEWEGUNGSMITTEL**

(30) Priorität: 20.05.2022 DE 102022205051
(71) Anmelder: Continental Automotive Technologies GmbH, 30165 Hannover (DE)
(72) Erfinder: Koch, Marcus, 60488 Frankfurt am Main (DE)
(74) Vertreter: Continental Corporation

(57) **Zusammenfassung**

Die vorliegende Erfindung betrifft eine Anzeigevorrichtung (1) sowie eine Armaturentafel mit einer solchen Anzeigevorrichtung (1). Die Erfindung betrifft zudem ein Fortbewegungsmittel mit einer solchen Armaturentafel. Die Anzeigevorrichtung (1) weist eine Displaybaugruppe (2) mit einem Anzeigepaneel (3) und ein Gehäuse (5) zur Aufnahme der Displaybaugruppe (2) auf. Das Gehäuse (5) weist an zwei gegenüberliegenden Seiten (50) nachgiebige Befestigungselemente (51) auf. Diese sind derart ausgestaltet, dass eine senkrecht auf das Anzeigepaneel (3) wirkende Kraft eine Drehung der Anzeigevorrichtung (1) um eine zu den zwei gegenüberliegenden Seiten (50) senkrechte Achse (52) bewirkt.

## Beschreibung

Die vorliegende Erfindung betrifft eine Anzeigevorrichtung sowie eine Armaturentafel mit einer solchen Anzeigevorrichtung. Die Erfindung betrifft zudem ein Fortbewegungsmittel mit einer solchen Armaturentafel.

Anzeigevorrichtungen im Fahrzeuginnenraum befinden sich direkt vor den Fahrzeuginsassen und sind daher immer der Gefahr eines Kopfaufpralls ausgesetzt. Ein neues Produkt muss daher einen zertifizierten Kopfaufschlagtest bestehen, um verwendet werden zu dürfen.

Bei Anzeigevorrichtungen besteht aufgrund der Glasoberfläche ein erhöhtes Risiko, einen solchen Test nicht zu bestehen, wenn keine Absorption der Energie des Aufpralls durch duktile Elemente hinter dem Glas erfolgt, während das Glas selbst ausreichend gestützt wird, um nicht zu zerspringen. Besonders die Glaskante ist dabei gefährdet, da ein Bruch umso wahrscheinlicher wird, je näher an der Glaskante der Aufprall erfolgt.

Heutige Lösungen basieren daher auf einer sehr robusten und steifen Auflage für das Glas in Kombination mit einem sehr duktilen Element hinter der Anzeigevorrichtung, das die Energie des Kopfaufpralls aufnimmt. In vielen Fällen benötigt das Glas eine zusätzliche Schutzfolie, um den Aufprall zu überstehen. Eine solche Folie beeinträchtigt allerdings die optische Leistung der Anzeigevorrichtung und führt zu zusätzlichen Kosten für die Anzeigevorrichtung und den Herstellungsprozess.

Eine ähnliche Problematik besteht auch bei anderen Bauteilen für den Innenraum eines Fortbewegungsmittels, die im Falle eines Aufpralls eines Insassen eine Gefahr für den betroffenen Insassen darstellen können.

In diesem Zusammenhang beschreibt EP 1 687 185 B1 eine Armaturentafel für ein Kraftfahrzeug, mit einem oberen Teil und einem unteren Teil, der mit dem oberen Teil mit Hilfe von Verbindungsmitteln verbunden ist: Der untere Teil ist durch eine Ablage gebildet, die sich im Verhältnis zu den unteren Gliedern eines Fahrgastes erstreckt. Die Verbindungsmittel können im Falle eines Aufpralls vorgegebener Stärke eines Fahrgastes gegen den unteren Teil entkoppelt werden, damit der untere Teil sich im Verhältnis zum oberen Teil zum vorderen Teil des Kraftfahrzeuges bewegen kann.

Es ist eine Aufgabe der Erfindung, Lösungen für einen verbesserten Schutz von Insassen eines Fortbewegungsmittels bereitzustellen.

Diese Aufgabe wird durch eine Anzeigevorrichtung mit den Merkmalen des Anspruchs 1, durch eine Armaturentafel gemäß Anspruch 9 und durch ein Fortbewegungsmittel gemäß Anspruch 10 gelöst. Bevorzugte Ausgestaltungen der Erfindung sind Gegenstand der abhängigen Ansprüche.

Gemäß einem ersten Aspekt der Erfindung weist eine Anzeigevorrichtung auf:
- eine Displaybaugruppe mit einem Anzeigepaneel; und
- ein Gehäuse zur Aufnahme der Displaybaugruppe;
wobei das Gehäuse an zwei gegenüberliegenden Seiten nachgiebige Befestigungselemente aufweist, die derart ausgestaltet sind, dass eine senkrecht auf das Anzeigepaneel wirkende Kraft eine Drehung der Anzeigevorrichtung um eine zu den zwei gegenüberliegenden Seiten senkrechte Achse bewirkt.

Bei der erfindungsgemäßen Lösung wird durch die bei einem Kopfaufprall auf das Anzeigepaneel ausgeübte Kraft eine Drehung der Anzeigevorrichtung und damit zugleich eine Bewegung des Aufprallpunktes fort vom Kopf des Insassen bewirkt. Gleichzeitig verschiebt sich der Aufprallpunkt in der Ebene des Anzeigepaneels weiter in den Innenbereich des Anzeigepaneels. Dies hat den Vorteil, dass das Risiko des Zerspringens des Anzeigepaneels bzw. eines Deckglases des Anzeigepaneels reduziert wird, sodass die Entstehung gefährlicher Glassplitter vermieden wird. Die nachgiebigen Befestigungselemente sind dabei vorzugsweise derart ausgestaltet, dass eine relativ kleine Kraft, die noch keine Gefahr für das Glas darstellt, zum Auslösen der Drehung ausreicht. Zugleich sollte die erforderliche Kraft groß genug sein, um ein versehentliches Auslösen der Drehung durch eine Fehlbedienung zu vermeiden.

Gemäß einem Aspekt der Erfindung weisen die zwei gegenüberliegenden Seiten jeweils zwei oder mehr nachgiebige Befestigungselemente auf. Durch die Verwendung von zwei oder mehr nachgiebige Befestigungselementen je Seite kann ein relativ großer Drehwinkel bei vergleichsweise kleiner Auslenkung oder Verformung der nachgiebigen Befestigungselemente erzielt werden.

Gemäß einem Aspekt der Erfindung sind die nachgiebigen Befestigungselemente integraler Bestandteil des Gehäuses. Dies hat den Vorteil, dass keine zusätzlichen Teile benötigt werden und somit auch keine zusätzlichen Werkzeuge oder Produktionsschritte. Dies führt zu einer robusteren Toleranzkette für die Anzeigevorrichtung sowie eventuelle Spalten zu angrenzenden Bauteilen. Zugleich werden keine unterschiedlichen Materialien kombiniert, was die potentiell störenden Auswirkungen von Temperaturänderungen reduziert, z.B. Verformungen oder den daraus resultierenden Mura-Effekt. Auch Korrosionsrisiken werden reduziert. Die nachgiebigen Befestigungselemente können im Rahmen der Produktion z.B. durch die Verwendung einer geeigneten Gussform oder durch eine nachträgliche Ausstanzung erzeugt werden.

Gemäß einem Aspekt der Erfindung sind das Gehäuse und die nachgiebigen Befestigungselemente aus einem Material auf Magnesiumbasis gefertigt. Magnesium ist ein häufig im Automobilbereich verwendetes Material, das insbesondere für Gehäuse von Anzeigevorrichtungen Verwendung findet. Natürlich können aber auch andere Materialien verwendet werden.

Gemäß einem Aspekt der Erfindung sind die nachgiebigen Befestigungselemente bistabile Elemente. Die Verwendung von bistabilen Elementen hat den Vorteil, dass sich die Anzeigevorrichtung nach der Drehung in einer definierten Position befindet. Anhand dieser Position ist für den Insassen oder auch eine Werkstatt sofort erkennbar, dass ein Aufprall auf die Anzeigevorrichtung erfolgt ist und diese instandgesetzt oder ausgetauscht werden muss.

Gemäß einem Aspekt der Erfindung realisieren die bistabilen Elemente einen Biegeknickmechanismus. Bei einem solchen Biegeknickmechanismus schnappt oder springt ein Arm eines bistabilen Elements bei Ausübung einer ausreichenden Kraft von einem stabilen ersten Zustand in einen stabilen zweiten Zustand. Dieses schnelle Umspringen führt zu einer großen Beschleunigung des Gehäuses gegenüber den Befestigungspunkten. Der Kopfaufprall ist in diesem Fall nur der Auslöser für die Drehung, der Biegeknickmechanismus beschleunigt diese im Anschluss. Dies verringert die Energie, die aufgrund des Aufpralls vom Anzeigepaneel oder dem Deckglas aufgenommen werden muss.

Gemäß einem Aspekt der Erfindung ist eine Armlänge der bistabilen Elemente so gewählt, dass der resultierende elastische Verformungsweg ein Umspringen von einem ersten Zustand in einen zweiten Zustand ermöglicht. Magnesium ist ein recht sprödes Material, das nur wenig elastisch ist. Falls das Gehäuse und die bistabilen Elemente aus einem Material auf Magnesiumbasis oder einem anderen spröden Material gefertigt sind, werden große Hebelarme benötigt, um den für das Umspringen erforderlichen elastischen Verformungsweg zu erzielen.

Gemäß einem Aspekt der Erfindung werden die bistabilen Elemente beim Umspringen vom ersten Zustand in den zweiten Zustand über die Streckgrenze hinaus belastet. Dies sorgt dafür, dass die bistabilen Elemente nach dem Umspringen nicht mehr funktionsfähig für diese Bewegung und daher kein zweites Mal zu benutzen sind. Selbst wenn man die bistabilen Elemente zurückschnappen lassen könnte, wäre die Kaltverfestigung der bistabilen Elemente problematisch. Das ist aber ein Zustand, der für einen erfolgten Unfall oder Kopfaufprall völlig untergeordnet ist. Vielmehr ist es sogar sicherheitsrelevant, dass das Auslösen des Mechanismus deutlich erkennbar und dieser klar nicht mehr nutzbar ist. Ein einmal ausgelöster Mechanismus muss zwingen ausgetauscht werden, denn die korrekte Funktion wäre bei einem zweiten Auslösen nicht mehr sicher gewährleistet.

Vorzugsweise wird eine erfindungsgemäße Anzeigevorrichtung in einer Armaturentafel für ein Fortbewegungsmittel eingesetzt. Die Anzeigevorrichtung kann dabei mittels der nachgiebigen Befestigungselemente an zugeordneten Befestigungspunkten der Armaturentafel befestigt sein. Eine solche Armaturentafel bietet einen verbesserten Aufprallschutz für die Insassen des Fortbewegungsm ittels.

Eine erfindungsgemäße Armaturentafel wird vorzugsweise in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch einen Kopfaufprall auf eine Anzeigevorrichtung in einem Fortbewegungsmittel;
- Fig. 2: zeigt schematisch eine Verschiebung eines Aufprallpunktes durch eine Drehung der Anzeigevorrichtung;
- Fig. 3: zeigt schematisch eine erfindungsgemäße Anzeigevorrichtung;
- Fig. 4: zeigt schematisch eine erfindungsgemäße Anzeigevorrichtung mit zwei bistabilen Elementen in einem ersten Zustand;
- Fig. 5: zeigt schematisch die Anzeigevorrichtung aus Fig. 4 nach einem Umspringen der bistabilen Elemente in einen zweiten Zustand; und
- Fig. 6: zeigt schematisch ein Fortbewegungsmittel, das eine erfindungsgemäße Anzeigevorrichtung nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

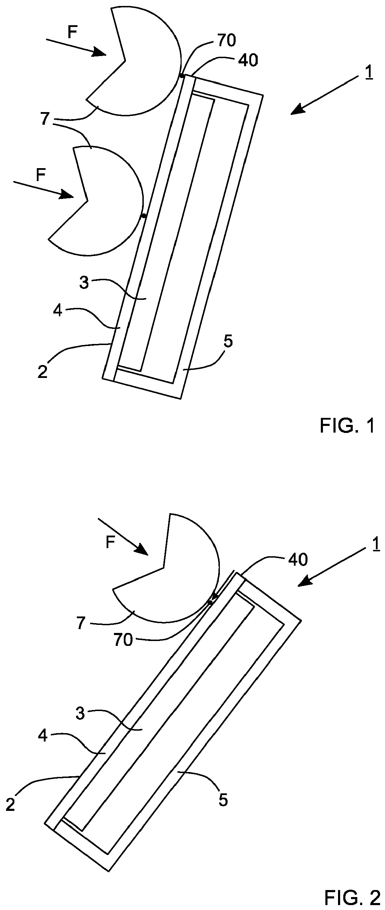

Fig. 1 zeigt schematisch einen Kopfaufprall auf eine Anzeigevorrichtung 1 in einem Fortbewegungsmittel. Dargestellt ist eine Seitenansicht. Die Anzeigevorrichtung 1 weist eine Displaybaugruppe 2 mit einem Anzeigepaneel 3 und einem Deckglas 4 auf, die in einem Gehäuse 5 angeordnet sind. Anzeigevorrichtungen 1 im Fahrzeuginnenraum befinden sich direkt vor den Fahrzeuginsassen und sind daher immer der Gefahr eines Kopfaufpralls ausgesetzt. Liegt der Aufprallpunkt 70 des Kopfes 7 eher im Innenbereich des Anzeigepaneels 3 bzw. des Deckglases 4, so ist ein Bruch des Glases relativ unwahrscheinlich. Allerdings wird ein Bruch umso wahrscheinlicher, je näher der Aufprallpunkt 70 an der Glaskante 40 liegt. Daher ist die Glaskante 40 besonders gefährdet.

Fig. 2 zeigt schematisch eine Verschiebung eines Aufprallpunktes 70 durch eine Drehung der Anzeigevorrichtung 1. Das Risiko des Zerspringens des Anzeigepaneels 3 bzw. des Deckglases 4 des Anzeigepaneels 3 lässt sich reduzieren, wenn der Aufprallpunkt 70 weg von der Glaskante 40 weiter in den Innenbereich des Anzeigepaneels 3 bzw. des Deckglases 4 verschoben wird. Dies lässt sich aufgrund der Anatomie des Körpers des Nutzers erreichen, indem beim Aufprall des Kopfes 7 auf das Anzeigepaneel 3 eine Drehung der Anzeigevorrichtung 1 um eine horizontale, im Wesentlichen parallel zum Anzeigepaneel 3 liegende Achse erfolgt. Wünschenswert ist für diese Drehung ein Mechanismus, bei dem eine relativ kleine Kraft F, die noch keine Gefahr für das Glas darstellt, zum Auslösen der Drehung ausreicht. Zugleich sollte die erforderliche Kraft F groß genug sein, um ein versehentliches Auslösen der Drehung durch eine Fehlbedienung zu vermeiden.

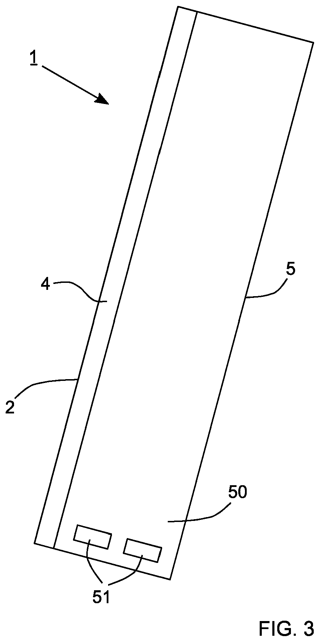

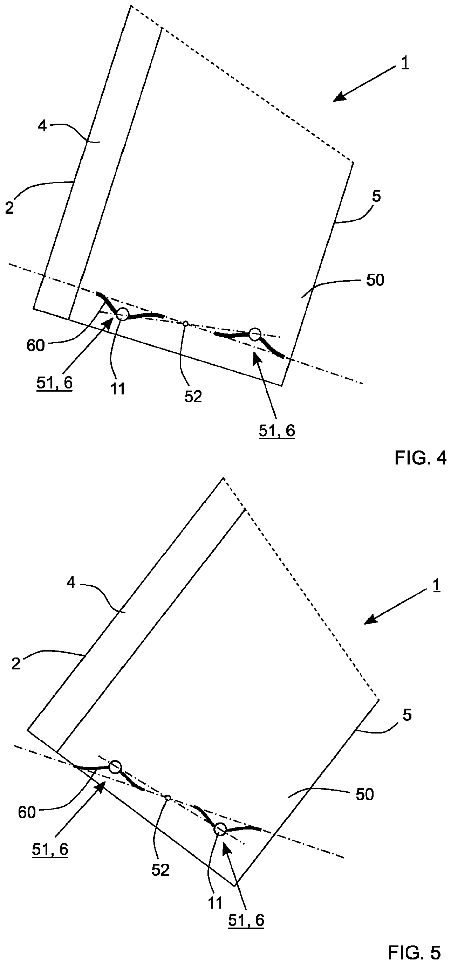

Fig. 3 zeigt schematisch eine erfindungsgemäße Anzeigevorrichtung 1. Das Gehäuse 5 weist an zwei gegenüberliegenden Seiten 50 nachgiebige Befestigungselemente 51 auf. Diese sind in Fig. 3 lediglich schematisch dargestellt. Eine konkrete Realisierung der nachgiebigen Befestigungselemente 51 wird weiter unten anhand von Fig. 4 und Fig. 5 erläutert. Die nachgiebigen Befestigungselemente 51 sind derart ausgestaltet, dass eine senkrecht auf das Anzeigepaneel bzw. das Deckglas 4 wirkende Kraft F eine Drehung der Anzeigevorrichtung 1 um eine zu den zwei gegenüberliegenden Seiten 50 senkrechte Achse bewirkt. Vorzugsweise weisen die zwei gegenüberliegenden Seiten 50 jeweils zwei oder mehr nachgiebige Befestigungselemente 51 auf. Durch die Verwendung von zwei oder mehr nachgiebige Befestigungselementen 51 je Seite 50 kann ein relativ großer Drehwinkel bei vergleichsweise kleiner Auslenkung oder Verformung der nachgiebigen Befestigungselemente 51 erzielt werden. Es ist aber ebenso möglich, je Seite 50 nur ein nachgiebiges Befestigungselement 51 vorzusehen, z.B. in Kombination mit einem zusätzlichen Drehpunkt.

Fig. 4 zeigt schematisch eine erfindungsgemäße Anzeigevorrichtung 1 mit zwei bistabilen Elementen 6 in einem ersten Zustand. Jedes der bistabilen Elemente 6 bildet ein nachgiebiges Befestigungselement 51 und realisiert einen Biegeknickmechanismus. Bei einem solchen Biegeknickmechanismus schnappt oder springt ein Arm 60 eines bistabilen Elements 6 bei Ausübung einer ausreichenden Kraft von einem stabilen ersten Zustand in einen stabilen zweiten Zustand. Fig. 5 zeigt schematisch die Anzeigevorrichtung 1 nach einem solchen Umspringen der bistabilen Elemente 6 in den zweiten Zustand. Dieses schnelle Umspringen führt zu einer großen Beschleunigung des Gehäuses 5 gegenüber den Befestigungspunkten 11 in der Armaturentafel. Der Kopfaufprall ist in diesem Fall nur der Auslöser für die Drehung um eine horizontale Achse 52, der Biegeknickmechanismus beschleunigt diese im Anschluss. Dies verringert die Energie, die aufgrund des Aufpralls vom Anzeigepaneel oder dem Deckglas 4 aufgenommen werden muss. Vorzugsweise ist eine Armlänge der bistabilen Elemente 6 so gewählt, dass der resultierende elastische Verformungsweg ein Umspringen vom ersten Zustand in den zweiten Zustand ermöglicht. Im Automobilbereich werden Gehäuse 5 von Anzeigevorrichtungen 1 zur Gewichtseinsparung oftmals aus Materialien auf Magnesiumbasis gefertigt. Allerdings ist Magnesium ist ein recht sprödes Material, das nur wenig elastisch ist. Daher werden große Hebelarme benötigt, um den für das Umspringen erforderlichen elastischen Verformungsweg zu erzielen.

Vorzugsweise werden die bistabilen Elemente 6 beim Umspringen vom ersten Zustand in den zweiten Zustand über die Streckgrenze hinaus belastet. Dies sorgt dafür, dass die bistabilen Elemente 6 nach dem Umspringen nicht mehr funktionsfähig für diese Bewegung und daher kein Zweites Mal zu benutzen sind. Selbst wenn man die bistabilen Elemente 6 zurückschnappen lassen könnte, wäre die Kaltverfestigung der bistabilen Elemente 6 problematisch. Das ist aber ein Zustand, der für einen erfolgten Unfall oder Kopfaufprall völlig untergeordnet ist. Vielmehr ist es sogar sicherheitsrelevant, dass das Auslösen des Mechanismus deutlich erkennbar und dieser klar nicht mehr nutzbar ist. Ein einmal ausgelöster Mechanismus muss zwingen ausgetauscht werden, denn die korrekte Funktion wäre bei einem zweiten Auslösen nicht mehr sicher gewährleistet.

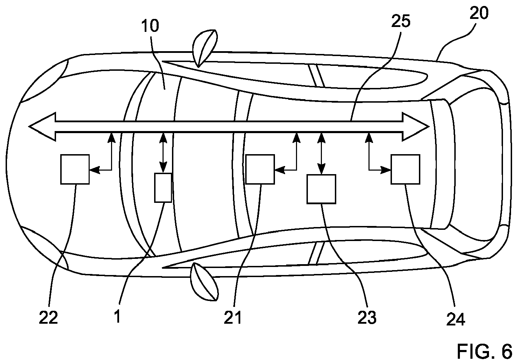

Fig. 6 zeigt schematisch ein Fortbewegungsmittel 20, das eine erfindungsgemäße Anzeigevorrichtung 1 nutzt. Bei dem Fortbewegungsmittel 20 handelt es sich in diesem Beispiel um ein Kraftfahrzeug. Das Kraftfahrzeug weist eine erfindungsgemäße Anzeigevorrichtung 1 auf, die in einer Armaturentafel 10 angeordnet ist. Mit einer Sensorik 21 können Daten zur Fahrzeugumgebung erfasst werden. Die Sensorik 21 kann insbesondere Sensoren zur Umfelderkennung umfassen, z.B. Ultraschallsensoren, Laserscanner, Radarsensoren, Lidarsensoren oder Kameras. Die von der Sensorik 21 erfassten Informationen können genutzt werden, um anzuzeigende Inhalte für die Anzeigevorrichtung 1 zu generieren. Weitere Bestandteile des Kraftfahrzeugs sind in diesem Beispiel ein Navigationssystem 22, durch das Positionsinformationen bereitgestellt werden können, sowie eine Datenübertragungseinheit 23. Mittels der Datenübertragungseinheit 23 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 24 vorhanden. Der Datenaustausch zwischen den verschiedenen Komponenten des Kraftfahrzeugs erfolgt über ein Netzwerk 25.

### Bezugszeichenliste

- 1: Anzeigevorrichtung
- 2: Displaybaugruppe
- 3: Anzeigepaneel
- 4: Deckglas
- 40: Glaskante
- 5: Gehäuse
- 50: Seite des Gehäuses
- 51: Befestigungselement
- 52: Achse
- 6: Bistabiles Element
- 60: Arm
- 7: Kopf
- 70: Aufprallpunkt
- 10: Armaturentafel
- 11: Befestigungspunkt
- 20: Fortbewegungsmittel
- 21: Sensorik
- 22: Navigationssystem
- 23: Datenübertragungseinheit
- 24: Speicher
- 25: Netzwerk
- F: Kraft

## Patentansprüche

1. Anzeigevorrichtung (1) mit:
- einer Displaybaugruppe (2) mit einem Anzeigepaneel (3); und
- einem Gehäuse (5) zur Aufnahme der Displaybaugruppe (2);
wobei das Gehäuse (5) an zwei gegenüberliegenden Seiten (50) nachgiebige Befestigungselemente (51) aufweist, die derart ausgestaltet sind, dass eine senkrecht auf das Anzeigepaneel (3) wirkende Kraft (F) eine Drehung der Anzeigevorrichtung (1) um eine zu den zwei gegenüberliegenden Seiten (50) senkrechte Achse (52) bewirkt.

2. Anzeigevorrichtung (1) gemäß Anspruch 1, wobei die zwei gegenüberliegenden Seiten (50) jeweils zwei oder mehr nachgiebige Befestigungselemente (51) aufweisen.

3. Anzeigevorrichtung (1) gemäß Anspruch 1 oder 2, wobei die nachgiebigen Befestigungselemente (51) integraler Bestandteil des Gehäuses (5) sind.

4. Anzeigevorrichtung (1) gemäß einem der vorherigen Ansprüche, wobei das Gehäuse (5) und die nachgiebigen Befestigungselemente (51) aus einem Material auf Magnesiumbasis gefertigt sind.

5. Anzeigevorrichtung (1) gemäß einem der vorherigen Ansprüche, wobei die nachgiebigen Befestigungselemente (51) bistabile Elemente (6) sind.

6. Anzeigevorrichtung (1) gemäß Anspruch 5, wobei die bistabilen Elemente (6) einen Biegeknickmechanismus realisieren.

7. Anzeigevorrichtung (1) gemäß Anspruch 6, wobei eine Armlänge der bistabilen Elemente (6) so gewählt ist, dass der resultierende elastische Verformungsweg ein Umspringen von einem ersten Zustand in einen zweiten Zustand ermöglicht.

8. Anzeigevorrichtung (1) gemäß Anspruch 7, wobei die bistabilen Elemente (6) beim Umspringen vom ersten Zustand in den zweiten Zustand über die Streckgrenze hinaus belastet werden.

9. Armaturentafel (10) für ein Fortbewegungsmittel (20), mit einer Anzeigevorrichtung (1) gemäß einem der Ansprüche 1 bis 8, wobei die Anzeigevorrichtung (1) mittels der nachgiebigen Befestigungselemente (51) an zugeordneten Befestigungspunkten (11) der Armaturentafel (10) befestigt ist.

10. Fortbewegungsmittel (20) mit einer Armaturentafel (10) gemäß Anspruch 9.
